# EUROPÄISCHE PATENTSCHRIFT

(11) **EP 3 275 706 B1**
(45) Veröffentlichungstag und Bekanntmachung des Hinweises auf die Patenterteilung: **08.04.2020**
(21) Anmeldenummer: 16181755.6
(22) Anmeldetag: 28.07.2016
(51) Int. Cl.: B60H 1/00, B60H 1/22

(54) **ANLAGE ZUM KLIMATISIEREN EINES FAHRGASTRAUMES EINES PASSAGIERBUSSES**
INSTALLATION FOR AIR CONDITIONING A PASSENGER COMPARTMENT OF A PASSENGER BUS
INSTALLATION DE CLIMATISATION D'UN HABITACLE D'UN BUS A PASSAGERS

(43) Veröffentlichungstag der Anmeldung: 31.01.2018
(73) Patentinhaber: Carrosserie Hess AG, 4512 Bellach (CH)
(72) Erfinder: NAEF, Alex, 4512 Bellach (CH); GISLER, Hans-Jörg, 3052 Zollikofen (CH); AEBERHARD, Hannes, 3294 Büren a. A. (CH)
(74) Vertreter: Keller & Partner Patentanwälte AG

(56) Entgegenhaltungen:
- DE-A1- 4 138 355
- DE-A1-102007 009 571
- DE-A1-102011 107 081
- DE-A1-102014 018 416

## Beschreibung

### Technisches Gebiet

Die Erfindung betrifft eine Anlage zum Klimatisieren eines Fahrgastraumes eines Passagierbusses. Sie betrifft weiter einen Passagierbus mit einer derartigen Anlage.

### Stand der Technik

Passagierbusse dienen zur Beförderung von Personen und weisen mehr als 8 Sitzplätze neben dem Fahrersitz auf. Sie werden im Linien- und Reiseverkehr eingesetzt. Zur Erhöhung der Fahrgastkapazität können Busse als Einfach- oder Doppelgelenkbusse ausgeführt sein. Als Einfachgelenkbusse ausgeführte Linienbusse weisen eine Beförderungskapazität von beispielsweise 150 - 200 Personen (davon ca. 50 Sitzplätze) auf, Doppelgelenkbusse entsprechend mehr.

Der Antrieb kann mittels eines Verbrennungsmotors (insbesondere Diesel- oder Gasmotor) oder mittels eines Elektromotors erfolgen, im zweiten Fall kann die Stromversorgung insbesondere von einer mitgeführten Batterie und/oder einer Oberleitung (Oberleitungsbus bzw. Trolleybus) erfolgen.

Für den Fahrgastkomfort ist unter anderem die Klimatisierung des Fahrgastraums von besonderer Bedeutung. Je nach Einsatzort des Passagierbusses, je nach Wetterlage und Passagieraufkommen ist eine Kühlung oder ein Beheizen des Fahrgastraums notwendig, um ein angenehmes Klima zu schaffen. Von besonderer Bedeutung, auch in Bezug auf die Sicherheit, ist zudem die Klimatisierung des Fahrerabteils bzw. Fahrerplatzes. Zu hohe oder zu tiefe Temperaturen können die Leistungsfähigkeit des Fahrers beeinträchtigen, ein Beschlagen der Frontscheibe und damit eine Beeinträchtigung der Sichtverhältnisse muss zudem unbedingt verhindert werden.

Bei herkömmlichen Bussen mit Verbrennungsmotor wird zum Beheizen in der Regel eine Konvektorenheizung eingesetzt, wobei die Heizflüssigkeit mit der Abwärme des Verbrennungsmotors und bei Bedarf mittels eines zusätzlichen Heizgeräts erhitzt und über eine Verrohrung zu den im Fahrgastraum verteilt angeordneten Konvektoren geführt wird. Die Kühlung erfolgt oft über im Dachbereich angeordnete Klimageräte, mittels welchen Aussenluft abgekühlt und dann in den Passagierraum geleitet werden kann.

Bei elektrisch betriebenen Fahrzeugen entfällt die Möglichkeit der Nutzung der Abwärme der Antriebsaggregate weitgehend. Ein elektrisches Aufheizen der Heizflüssigkeit für die Konvektorenheizung erhöht den Energiebedarf und verkürzt die Reichweite im batteriegestützten Betrieb. Die für die Konvektorenheizung benötigte Verrohrung sowie die Konvektoren sind zudem aufwendig, benötigen Platz und schränken die Flexibilität bei der Innenraumgestaltung ein.

Es gibt deshalb Ansätze, bei Passagierbussen, insbesondere bei solchen, die elektrisch betrieben werden, den Innenraum auf andere Weise zu klimatisieren.

Die DE 10 2011 107081 A1 (Spheros GmbH) offenbart ein Verfahren und eine Vorrichtung zum Konditionieren der Luft im Innenraum eines Fahrzeuges, wobei der elektrische Energiebedarf beim Heizen von Elektro- oder Hybridfahrzeugen vermindert werden soll. Dazu wird ein Umluftverfahren vorgeschlagen, das keine grossen Mengen kalter Aussenluft erwärmen muss. Um eine zu hohe Luftfeuchtigkeit im Fahrzeuginneren zu verhindern, wird die Innenraumluft unter ihren Taupunkt, der im Winter meist über der Aussentemperatur liegt, abgekühlt; für das Wiederaufheizen wird daher weniger Energie verbraucht als für das Erwärmen von Aussenluft. Zudem reicht bei der getrockneten Umluft im Vergleich zur Aussenluft schon eine niedrigere Temperatur aus, um ein Beschlagen der Fahrzeugscheiben zu verhindern. Um den Kohlendioxidanteil nicht zu gross werden zu lassen, wird der Umluft ein kleiner Teil Aussenluft beigemischt. Die Anlage umfasst ein Dachklimagerät zum Kühlen, Entfeuchten und Erwärmen von Luft für den Innenraum eines Fahrzeuges. Drei verschiedene Wärmetauscher werden von Kühlmittel durchströmt und arbeiten je nach Betriebsart als Verdampfer oder Verflüssiger. Eine Luftheizvorrichtung kann nachgeordnet sein.

Die DE 10 2014 018 416 A1 (Daimler AG) befasst sich mit Heizeinrichtungen für Hybrid- oder reine Elektrofahrzeuge, auch im Omnibus-Bereich. Damit nicht die Luft des kompletten Fahrzeug-Innenraums aufgeheizt werden muss, schlägt sie zum einen vor, Strahlungswärmequellen einzusetzen und zum anderen, diese nur dann zu aktivieren, wenn die Anwesenheit von Personen festgestellt wird. Bei den Strahlungswärmequellen handelt es sich bevorzugt um Flächenstrahler, die auf Infrarot-Technologie basieren.

Auch die US 2011/042988 A1 (M. A. Alpert) betrifft das Heizen und/oder Kühlen von Fahrzeuginnenräumen. Dazu wird die Verwendung von Strahlungsheizquellen oder - Kühlungselementen vorgeschlagen, darunter Infrarot-Heizelemente, welche auch im Dachbereich angeordnet sein können. Ziel ist primär die Vermeidung von Geräuschen. Strahlungswärmequellen haben den Vorteil, dass die erzeugte Wärme über Strahlung direkt zu den Fahrgästen übertragen wird. Ein Aufheizen der Innenluft ist nicht notwendig und erfolgt nur teilweise durch die Erwärmung angestrahlter Objekte. Die benötigte Heizenergie kann somit bei typischen Verwendungssituationen von Passagierbussen reduziert werden.

Insbesondere in kälteren Klimazonen (z. B. in Europa nördlich der Alpen) und im Winterbetrieb kann eine Beheizung ausschliesslich durch Strahlungswärmequellen jedoch nicht ausreichend oder nicht wirtschaftlich sein.

### Darstellung der Erfindung

Aufgabe der Erfindung ist es, eine dem eingangs genannten technischen Gebiet zugehörende Anlage zum Klimatisieren eines Fahrgastraumes eines Passagierbusses zu schaffen, welche auch bei tieferen Aussentemperaturen wirtschaftlich funktioniert.

Die Lösung der Aufgabe ist durch die Merkmale des Anspruchs 1 definiert. Gemäss der Erfindung umfasst die Anlage
a) mindestens ein Dachklimagerät zum Erzeugen von wahlweise erhitzter oder abgekühlter Luft zur Klimatisierung des Fahrgastraums;
b) eine Infrarot-Heizanlage für den Fahrgastraum;
c) ein Heizgerät zum Erwärmen eines Wärmeträgers;
wobei
d) das mindestens eine Dachklimagerät einen Wärmetauscher als Heizelement für das Erzeugen der erhitzten Luft aufweist; und
e) das Heizgerät mit dem Wärmetauscher des mindestens einen Dachklimageräts derart verbunden ist, dass im Wasserheizgerät erhitztes Wasser dem Wärmetauscher zuführbar ist.

Als Dachklimagerät wird hier ein Gerät verstanden, welches ein im Dachbereich angeordnetes Element mit einem Wärmetauscher einer Kältemaschine aufweist und in der Lage ist, Aussenluft abzukühlen und dem Fahrgastraum zuzuführen. Entsprechende Geräte, auch für den Einsatz in Passagierbussen, sind grundsätzlich bekannt.

Beim Heizgerät handelt es sich um ein Gerät zum Erwärmen eines Wärmeträgers. Letzterer ist dazu geeignet, Wärme über ein Rohrsystem zu anderen Komponenten zu transportieren. Der Wärmeträger wird insbesondere in einem geschlossenen Kreislauf (bzw. mehreren geschlossenen Kreisläufen) geführt. Das Heizgerät wird insbesondere elektrisch betrieben.

Die Verbindung des Heizgeräts mit dem Wärmetauscher des mindestens einen Dachklimageräts erfolgt durch einen zusätzlichen Kreislauf für den vom Heizgerät erwärmten Wärmeträger, der Heizrohre aufweist, die im Wärmetauscher parallel zu den Rohren verlaufen, welche das vom Dachklimagerät selbst temperierte Fluid führen. Die Luft passiert sowohl die letztgenannten Rohre als auch die Heizrohre, wobei die beiden Rohrverläufe in Bezug auf die Fliessrichtung der Luft nebeneinander (auch in mehreren Schichten abwechslungsweise) oder hintereinander angeordnet sein können.

Mit Hilfe des Wärmetauschers lässt sich durch Zuführen von durch das Heizgerät erwärmtem Wärmeträger das Dachklimagerät auch zum Beheizen von in den Fahrgastraum abgegebener Luft einsetzen bzw. eine ohnehin vorhandene Heizleistung des Dachklimageräts bei Bedarf erheblich steigern. Auch bei tiefen Aussentemperaturen lässt sich so eine ausreichende Beheizung des Fahrgastraums erreichen. Bei Temperaturen im Übergangsbereich lässt sich das Heizgerät auch nur zeitweise einsetzen, z. B. für das Aufheizen des Fahrzeugs zu Betriebsbeginn.

Durch die Kombination der Infrarot-Heizanlage (welche ohne Komfortverlust für die Fahrgäste eine gewisse Absenkung der Lufttemperatur im Innenraum erlaubt) und der Unterstützung des Dachklimageräts durch das Heizgerät ergibt sich eine wirtschaftliche und leistungsfähige Art der Beheizung.

Die Infrarot-Heizanlage verbessert zudem den Komfort für die Fahrgäste, indem sie diese auch im Bein- und Fussbereich wärmt und nicht primär im Bereich des Kopfs und Oberkörpers wie das Dachklimagerät, dessen erhitzte Luft von oben in den Fahrgastraum eingebracht wird.

Die erfindungsgemässe Anlage ist insbesondere für elektrisch betriebene Passagierbusse geeignet, bei welchen keine Motorabwärme sinnvoll nutzbar ist, aber nicht auf diesen Anwendungsbereich beschränkt.

Insbesondere bei moderaten Temperaturen ergibt sich eine reduzierte totale Heizleistung, die für eine komfortable Temperierung des Fahrgastraums notwendig ist. Namentlich kann das Heizgerät im Rahmen der erfindungsgemässen Anlage bei einer deutlich tieferen Leistung betrieben werden als ein Heizgerät für das Heizwasser einer Konvektorenheizung. Die Einsparung kann 10-15 kW betragen.

Mit Vorteil wird eine gesamte benötigte Heizleistung zum Beheizen des Fahrgastraumes durch das mindestens eine Dachklimagerät (mit Unterstützung durch das Heizgerät) und die Infrarot-Heizanlage bereitgestellt. Wasser-Luft-Konvektoren und die dazu notwendige Verrohrung erübrigen sich somit. Dies spart Kosten und schafft zusätzlichen Innenraum und eine erhöhte Flexibilität bei der Innenraumgestaltung.

Bevorzugt wird beim Heizgerät als Wärmeträger Wasser eingesetzt. Entsprechend handelt es sich beim Heizgerät um ein Gerät zum Erhitzen von Wasser, und der Wärmetauscher, dem der Wärmeträger zugeführt wird, ist ein Wasser-Luft-Wärmetauscher. Das Wasserheizgerät kann als Durchlauferhitzer oder als Boiler mit einem Warmwasserspeicher ausgestaltet sein. Es wird insbesondere elektrisch betrieben.

Mit Vorteil kann das mindestens eine Dachklimagerät als Wärmepumpe betrieben werden. Dies steigert die Effizienz des Dachklimageräts und ermöglicht eine weitere Reduktion des Energieverbrauchs. Das Dachklimagerät ist so in der Lage, im umgekehrten Betrieb Aussenluft zu erwärmen und diese dem Fahrgastraum zuzuführen. Die Erwärmung kann in diesem Fall mit oder ohne Unterstützung durch das Heizgerät erfolgen.

Ein Dachklimagerät mit Wärmepumpe ist allerdings nicht zwingend, die Erfindung lässt sich auch ohne eine solche umsetzen.

Bevorzugt umfasst die Anlage eine Steuerung zum Steuern des mindestens einen Dachklimageräts, der Infrarot-Heizanlage und des Heizgeräts, welche mindestens in einen ersten Betriebsmodus versetzbar ist, in welchem das mindestens eine Dachklimagerät erhitzte Luft zur Klimatisierung des Fahrgastraums erzeugt und die Infrarot-Heizanlage ausgeschaltet ist und in einen zweiten Betriebsmodus, in welchem das mindestens eine Dachklimagerät erhitzte Luft zur Klimatisierung des Fahrgastraums erzeugt und die Infrarot-Heizanlage eingeschaltet ist.

Das Vorhandensein sowohl einer schnell wirkenden Infrarot-Heizanlage als auch einer leistungsfähigen Heizung durch die Dachklimageräte ermöglicht eine höhere Flexibilität beim Einsatz der zur Verfügung stehenden Heizenergie.

Nebst den genannten Betriebsmodi kann das Dachklimagerät im Heizbetrieb (Wärmepumpenbetrieb) zudem wahlweise durch die Zuführung erhitzten Wärmträgers vom Heizgerät unterstützt werden. Es ergeben sich somit im Heizbetrieb insgesamt folgende mögliche Betriebsmodi:

| **Modus** | **Dachlklimagerät** | **IR-Heizanlage** |
|---|---|---|
| 0 | aus | aus |
| Ia | ein, ohne Unterstützung | aus |
| Ib | ein, mit Unterstützung | aus |
| IIa | ein, ohne Unterstützung | ein |
| IIb | ein, mit Unterstützung | ein |
| III | aus | ein |

Bevorzugt werden der erste Betriebsmodus oder der zweite Betriebsmodus in Abhängigkeit einer Aussentemperatur und einer Energieverfügbarkeit aktiviert. Die Energieverfügbarkeit ergibt sich insbesondere aus dem Ladestand einer Batterie, dem prognostizierten zukünftigen Energiebedarf, der zur Verfügung stehenden Rekuperationsleistung und/oder der Verfügbarkeit in einem Stromnetz (im Oberleitungsbetrieb).

Für einen möglichst wirtschaftlichen Betrieb kann der Betriebsmodus beispielsweise anhand der folgenden Kriterien gewählt werden, wobei T₀ < T₁ < T₂ vorgegebene Temperaturen bezeichnen:

| **Temperatur** | **Einsatz** | **Energieverfügbarkeit** | **Modus** |
|---|---|---|---|
| T > T₂ | - | - | 0 (ggf. kühlen) |
| T₁ < T < T₂ | Betriebsbeginn | - | IIb |
| T₁ < T < T₂ | Fahrbetrieb | niedrig | Ia oder III |
| T₁ < T < T₂ | Fahrbetrieb | hoch | Iia oder III |
| T₁ < T < T₂ | Betriebsende | - | 0 (nur Frontbox) |
| T₀ < T < T₁ | Betriebsbeginn | - | IIb |
| T₀ < T < T₁ | Fahrbetrieb | niedrig | IIa |
| T₀ < T < T₁ | Fahrbetrieb | hoch | IIb |
| T₀ < T < T₁ | Betriebsende | - | 0 (nur Frontbox) |
| T < T₁ | - | - | IIb |

Diese Auflistung ist schematisch; weitere Kriterien können herangezogen werden. Zudem kann auch eine feinere Abstufung vorgenommen werden.

Mit Vorteil umfasst die Anlage eine Frontbox zum Klimatisieren eines Fahrerabteils und zum Befreien einer Frontscheibe von Beschlag. Die Frontbox umfasst ein autonomes Heiz-/Klimasystem. Das Befreien der Frontscheibe von Beschlag (Defrosten) erfolgt mit trockener Umluft. Die Frontbox lässt sich im Wesentlichen unabhängig von der Klimatisierung des Fahrgastraums betreiben. Dies ermöglicht eine besondere Berücksichtigung der Erfordernisse des Fahrers. Zudem lässt sich der Fahrerplatz bzw. das Fahrerabteil im Überführungsbetrieb (z. B. bei Betriebsbeginn oder Betriebsende) klimatisieren, auch wenn die Klimatisierung des Fahrgastraums, welche ungleich mehr Energie benötigt, ausgeschaltet wird.

Mit Vorteil ist das Heizgerät zum Beheizen des Fahrerabteils mit der Frontbox verbunden. Die Frontbox umfasst in diesem Fall einen Wärmetauscher, dem Wasser des Heizgeräts zugeführt werden kann, so dass die Frontbox bei Bedarf hohe Heizleistungen zur Verfügung stellen kann.

Ein elektrisch angetriebener Passagierbus kann Fahrbatterien aufweisen, mittels welchen er auf seiner gesamten Strecke oder bereichsweise angetrieben wird. Im zweiten Fall handelt es sich beispielsweise um einen Oberleitungsbus mit einer Fahrbatterie für nicht mit einer Fahrleitung versehene Streckenabschnitte.

In diesem Fall umfasst die Anlage bevorzugt einen Kühlkreislauf für auf dem Dach des Passagierbusses angeordnete Fahrbatterien, wobei der Kühlkreislauf mit mindestens einem der Dachklimageräte verbunden ist. Die im Kühlkreislauf zirkulierende Kühlflüssigkeit lässt sich also von dem mindestens einen Dachklimagerät kühlen, namentlich durch einen Wärmetauscher, dem im Kühlbetrieb des Klimageräts abgekühltes Kühlfluid zugeführt wird, während in einem allfälligen Wärmepumpen-Heizbetrieb des Klimageräts Kühlfluid zugeführt werden kann, welches durch das Erwärmen der in den Innenraum zugeführten Luft und das Passieren eines Expansionsventils abgekühlt worden ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Ansicht eines Passagierbusses mit einer schematisch dargestellten erfindungsgemässen Anlage zum Klimatisieren des Fahrgastraumes;
- Fig. 2A: eine schematische Darstellung des Klimageräts im Kühlbetrieb;
- Fig. 2B: eine schematische Darstellung des Klimageräts im Heizbetrieb; und
- Fig. 3: eine Darstellung der Energieersparnis im Jahresverlauf.

Grundsätzlich sind in den Figuren gleiche Teile mit gleichen Bezugszeichen versehen.

### Wege zur Ausführung der Erfindung

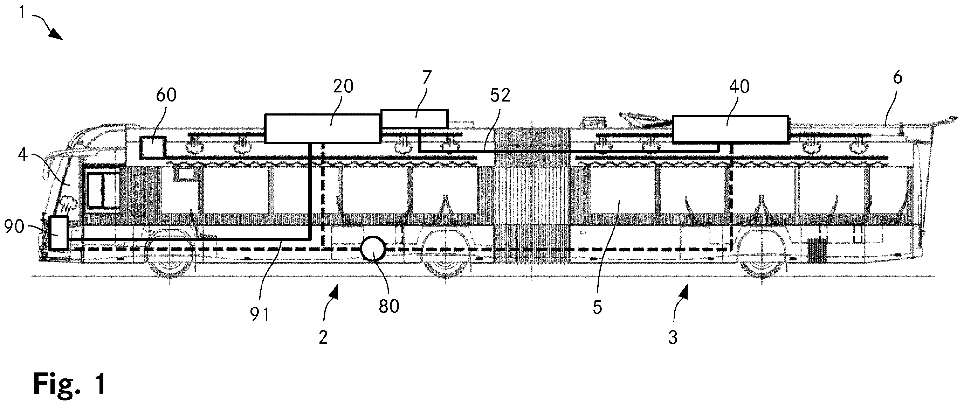

Die Figur 1 ist eine schematische Seitenansicht eines Passagierbusses mit einer schematisch dargestellten erfindungsgemässen Anlage zum Klimatisieren des Fahrgastraumes. Der Passagierbus 1 ist als Gelenkbus mit einem Vorderwagen 2 und einem Hinterwagen 3 ausgeführt, welche über ein Gelenk mit Faltenbalg miteinander verbunden sind. Der Vorderwagen 2 ist zweiachsig, der Hinterwagen 3 ist einachsig. Der Innenraum des Passagierbusses gliedert sich in ein am vorderen Ende angeordnetes Fahrerabteil 4 und den dahinter angeordneten Fahrgastraum 5. Letzterer ist durchgehend in Niederflurbauweise ausgeführt. Der Passagierbus 1 umfasst elektrische Fahrmotoren, die in Unterbodenbauweise angeordnet sind.

Beim Passagierbus 1 handelt es sich um einen Oberleitungsbus mit einem Stromabnehmer 6, mittels welchem elektrische Energie von einem Fahrdraht aufgenommen werden kann. Der Passagierbus umfasst weiter eine auf dem Dach angeordnete Fahrbatterie 7, welche elektrische Energie zwischenspeichern kann. Die Fahrmotoren des Passagierbusses 1 können bei fehlender externer Stromversorgung (z. B. in Abschnitten einer Fahrstrecke ohne Oberleitung) mit Strom aus der Fahrbatterie 7 betrieben werden.

Die in der Figur 1 schematisch eingezeichnete Anlage zum Klimatisieren des Fahrgastraumes umfasst ein vorderes Klimagerät 20, ein hinteres Klimagerät 40, eine Infrarot-Heizung 60, ein Wasserheizgerät 80 und eine Frontbox 90.

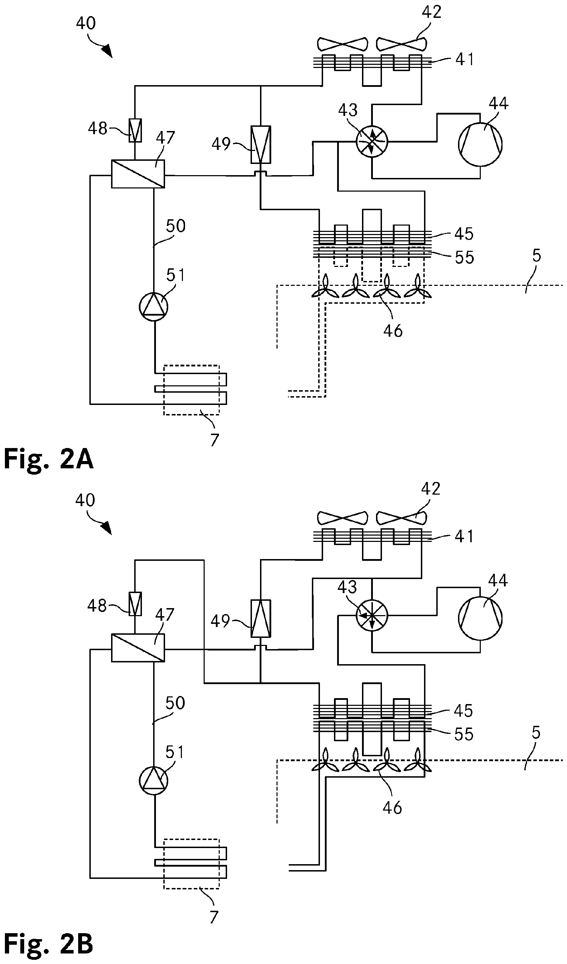

Das vordere Klimagerät 20 ist auf dem Dach des Vorderwagens 2 angeordnet. Es ist sowohl im Kühl- als auch im Heizbetrieb einsetzbar und weist eine Wärmepumpe auf. Eine nähere Beschreibung der Funktionsweise und der Betriebsmodi folgt unten, im Zusammenhang mit der Figur 2. Entsprechende Klimageräte sind im Handel erhältlich. So bietet beispielsweise die Firma Ingersoll-Rand Company, Swords, Irland unter der Marke Thermo King derartige Geräte unter der Bezeichnung Athenia™ Mk II, Typen E-700H und E-960H im Markt an. Das Klimagerät umfasst einen üblichen Wasser-Luft-Wärmetauscher mit Aluminium-Lamellen, durch welche die zu erhitzende oder abzukühlende Luft gezogen wird, wobei Umluft, Frischluft oder eine Mischung verwendet werden kann - die Steuerung erfolgt durch eine entsprechende Klappe. Anschliessend ist ein Gebläse angeordnet, mittels welchem die Luft in den Fahrgastraum 5 geleitet und verteilt wird. Zusätzlich umfasst das vordere Klimagerät 20 einen weiteren Wasser-Luft-Wärmetauscher, dessen Heizrohre durch dieselben Aluminium-Lamellen gezogen sind. In Bezug auf die Flussrichtung der Luft sind die Heizrohre nach den Rohren des Wasser-Luft-Wärmetauschers des Klimageräts angeordnet.

Das vordere Klimagerät 20 bezieht Wechselstrom mit einer Spannung von 400 V sowie Heisswasser vom Wasserheizgerät 80. Die Kälteleistung des vorderen Klimageräts 20 beträgt maximal ca. 36 kW, die Heizleistung mittels Wärmepumpe beträgt max. ca. 15 kW, mittels Heizwasser max. ca. 19 kW.

Das vordere Klimagerät 20 dient der Klimatisierung des Fahrgastraums 5 (Heizung/Kühlung) mit Frischluft oder im Umluftbetrieb. Das Heizen erfolgt mittels einer Wärmeübertragung zwischen dem Heizwasser und der Luft und/oder mittels einer Wärmeübertragung zwischen dem Kältemittel und der Luft (Wärmepumpenbetrieb). Das Kühlen erfolgt mittels einer Wärmeübertragung zwischen der Luft und dem Kältemittel. Weiter dient das vordere Klimagerät 20 zur Versorgung des Verdampfers der Frontbox 90 mit Kältemittel. Dazu weist es Anschlüsse für einen Kältemittel-Kreislauf 91 zur Frontbox 90 auf.

Das hintere Klimagerät 40 ist auf dem Dach des Hinterwagens 3 angeordnet. Es entspricht weitgehend dem vorderen Klimagerät 20. Es ist also ebenfalls sowohl im Kühl- als auch im Heizbetrieb einsetzbar und weist eine Wärmepumpe auf. Auch das hintere Klimagerät 40 bezieht Wechselstrom mit einer Spannung von 400 V sowie Heisswasser vom Wasserheizgerät 80. Die Leistungswerte des hinteren Klimageräts 20 entsprechen denjenigen des vorderen Klimageräts 20.

Das hintere Klimagerät 40 dient der Klimatisierung des Fahrgastraums 5 (Heizung/Kühlung) mit Frischluft oder im Umluftbetrieb. Das Heizen erfolgt mittels einer Wärmeübertragung zwischen dem Heizwasser und der Luft und/oder mittels einer Wärmeübertragung zwischen dem Kältemittel und der Luft (Wärmepumpenbetrieb). Das Kühlen erfolgt mittels einer Wärmeübertragung zwischen der Luft und dem Kältemittel. Weiter dient das hintere Klimagerät 40 zur Bereitstellung eines Kühlfluids zum Kühlen der Fahrbatterie 7 mittels eines Wärmeübertragers. Dazu wird das Kühlfluid in einem Kreislauf 52 zwischen dem Wärmeübertrager und dem Kühlsystem der Fahrbatterie 7 übertragen.

Die Frontbox 90 ist in der Fahrzeugfront, im Bereich des Fahrerabteils 4, angeordnet. Sie ermöglicht das Beheizen des Fahrerabteils 4 mittels vom Wasserheizgerät 80 bezogenen Heizwassers. Die entsprechende Heizleistung beträgt max. ca. 22 kW. Die Frontbox 90 ermöglicht ebenfalls das Kühlen des Fahrerabteils 4, wobei wie oben angegeben Kühlmittel vom vorderen Klimagerät 20 bezogen wird. Die entsprechende Kälteleistung beträgt max. ca. 8 kW. Nebst dem Heizwasser und dem Kältemittel benötigt die Frontbox lediglich eine Stromversorgung mit 24 V-Gleichstrom.

Die Frontbox 90 umfasst den mit dem Kältemittel-Kreislauf 91 verbundenen Verdampfer, das mittels dem Heizwasser betriebene Heizelement, ein Gebläse für die Luftzirkulation, eine Klappe zur Wahl zwischen Umluft- und Frischluftbetrieb, eine Klappe zur Steuerung der Luftverteilung (insbesondere zwischen der Fahrerposition und der Frontscheibe), einen Luftfilter und die benötigten Steuerungselemente. Die Frontbox 90 dient der Klimatisierung des Fahrerplatzes (Heizen/Kühlen) im Frischluft- oder Umluftbetrieb sowie dem Befreien der Frontscheibe von Beschlag (Eis bzw. Kondenswasser).

Das Wasserheizgerät 80 ist im Unterflurbereich angeordnet. Seine maximale Heizleistung beträgt 20-30 kW. Im dargestellten Ausführungsbeispiel wird es mit 400 V - Gleichstrom betrieben, es ist aber grundsätzlich auch ein Betrieb mit 600-800 V - Gleichstrom (analog zu den Fahrmotoren), mit Wechselstrom oder durch Brennstoffe möglich. Das Wasserheizgerät 80 arbeitet im Durchlaufbetrieb und umfasst eine Heizwendel, eine Umwälzpumpe und Steuerungselemente. Vom Wasserheizgerät 80 erwärmtes Wasser wird über einen Wasserkreislauf den beiden Klimageräten 20, 40 und der Frontbox 90 zugeführt.

Die Infrarot-Heizung 60 ist im Bereich der Dach-Innenverschalung des Passagierbusses 1 angeordnet. Sie erstreckt sich im Wesentlichen über die gesamte Länge des Fahrgastraums 5. Sie umfasst 17 Platten mit einer maximalen Heizleistung von je ca. 170 W und einer flächigen Ausdehnung von ca. 1000x250 mm. Die gesamte maximale Heizleistung beträgt somit ca. 2.7 kW. Die Wärme wird praktisch ausschliesslich in einen Halbraum (zum Innenraum) abgegeben. Die Energieversorgung erfolgt über 24 V - Gleichstrom. Die Betriebstemperatur beim Aufheizen beträgt max. ca. 70 °C.

Mit der Infrarot-Heizung 60 wird der Fahrgastraum beheizt, wobei vor allem Oberflächen erwärmt werden. Dies führt bei den Fahrgästen zu einem erhöhten Wärmeempfinden bei reduzierter Lufttemperatur.

Eine konvektive Heizung ist nicht vorhanden und wird auch nicht benötigt.

Die Figur 2A ist eine schematische Darstellung des Klimageräts im Kühlbetrieb. Die Darstellung zeigt das hintere Klimagerät 40, welches neben der Klimatisierung des Fahrgastraums 5 auch zur Bereitstellung eines Kühlfluids zum Kühlen der Fahrbatterie 7 zuständig ist. Das Klimagerät 40 umfasst einen ersten Wärmetauscher 41 mit einem zugeordneten Gebläse 42, welches Aussenluft ansaugt und durch Aluminium-Lamellen des ersten Wärmetauschers 41 leitet. Der erste Wärmetauscher ist an seinem ersten Ende über ein Umschaltventil 43 mit einem Kompressor 44 verbunden. Das Umschaltventil 43 ist zudem über eine Leitung mit dem ersten Ende eines zweiten Wärmetauschers 45 verbunden sowie über einen dritten Wärmetauscher 47 und ein Expansionsventil 48 mit dem zweiten Ende des ersten Wärmetauschers 41.

Das zweite Ende des ersten Wärmetauschers 41 ist schliesslich über ein weiteres Expansionsventil 49 mit dem zweiten Ende des zweiten Wärmetauschers 45 verbunden.

Der zweite Wärmetauscher 45 ist ebenfalls mit einem Gebläse 46 ausgerüstet, mittels welchem sich Luft ansaugen, durch die Aluminium-Lamellen des zweiten Wärmetauschers leiten und in den Fahrgastraum 5 abgeben lässt. Ebenfalls durch diese Aluminium-Lamellen geführt sind die Heizrohre eines vierten Wärmetauschers 55, welche über Leitungen mit dem Wasserheizgerät verbunden sind. Da dieser Wärmetauscher 55 im Kühlbetrieb nicht verwendet wird, sind die entsprechenden Elemente gestrichelt eingezeichnet (vgl. Figur 2B).

Der dritte Wärmetauscher 47 ist mit einem Kühlmittelkreislauf 50 für die Fahrbatterie 7 verbunden. Dieser weist eine eigene Pumpe 51 auf.

Im Kühlbetrieb, welcher in der Figur 2A dargestellt ist, ist das Umschaltventil 43 derart geschaltet, dass vom Kompressor 44 verdichtetes Kühlmittel zum ersten Ende des ersten Wärmetauschers 41 geleitet wird und dass im zweiten Wärmetauscher 45 verdampftes Kühlmittel, bzw. rückgeführtes Kühlmittel vom dritten Wärmetauscher 47 wieder dem Kompressor 44 zugeführt wird.

Im Kühlbetrieb ist die Funktionsweise somit wie folgt: Das zunächst flüssige Kühlmittel passiert den zweiten Wärmetauscher 45 und wird darin verdampft, wobei die den zweiten Wärmetauscher 45 passierende und in den Fahrgastraum 5 geleitete Luft abgekühlt wird. Das Kühlmittel gelangt sodann über das Umschaltventil 43 in den Kompressor 44 und wird dort verdichtet. Im ersten Wärmetauscher 41 erfolgt anschliessend die Kondensation, wobei Wärme an die Umgebung abgegeben wird. Das kondensierte Kühlmittel wird dann den beiden Expansionsventilen 48, 49 zugeführt, wo es expandiert und sich somit abkühlt. Ein Anteil des Kühlmittels wird dann wieder dem zweiten Wärmetauscher 45 zugeführt. Der andere Anteil passiert den dritten Wärmetauscher 47 und kühlt dabei das Kühlmittel im Kühlmittelkreislauf 50 für die Fahrbatterie 7 ab.

Die Figur 2B ist eine schematische Darstellung des Klimageräts im Heizbetrieb. Das Umschaltventil 43 ist in dieser Betriebsart derart geschaltet, dass vom Kompressor 44 verdichtetes Kühlmittel zum ersten Ende des zweiten Wärmetauschers 45 geleitet wird und dass im Expansionsventil 49 expandiertes Kühlmittel sowie rückgeführtes Kühlmittel vom dritten Wärmetauscher 47 über den ersten Wärmetauscher 41 wieder dem Kompressor 44 zugeführt wird.

Im Heizbetrieb ist die Funktionsweise somit wie folgt: Dem Kühlmittel wird mittels Kompressor 44 Wärme zugeführt, das erwärmte Kühlmittel gibt dann Wärme über den zweiten Wärmetauscher 45 an den Fahrgastraum 5 ab. Anschliessend passiert das Kühlmittel das Expansionsventil 49 und wird dadurch weiter abgekühlt, so dass es im ersten Wärmetauscher 41 Wärme aus der Umgebung aufnehmen kann. Anschliessend wird das Kühlmittel wieder dem Kompressor 44 zugeführt. Das Klimagerät 40 funktioniert somit als Wärmepumpe, mit umgekehrtem Kreislauf.

Die Kühlung der Fahrbatterie 7 erfolgt über einen Anteil der Kühlflüssigkeit, welcher im zweiten Wärmetauscher 45 Wärme entzogen wurde und welche anschliessend über das Expansionsventil 48 dem dritten Wärmetauscher 47 zugeführt wird.

Zusätzlich kann im Wasserheizgerät erhitztes Wasser dem vierten Wärmetauscher 55 zugeführt werden, so dass eine weitere Erwärmung der in den Fahrgastraum 5 geführten Luft stattfindet.

Der Einsatz des Wasserheizgeräts erfolgt insbesondere bei tieferen Aussentemperaturen. Ab einer gewissen unteren Grenztemperatur droht nämlich die Vereisung des ersten Wärmetauschers 41, zudem reicht die Heizleistung allein der Wärmepumpe nicht mehr aus, um eine ausreichende Temperatur im Fahrgastraum zu erreichen. Das zusätzliche Aufheizen der zugeführten Luft mittels des vierten Wärmetauschers 55 verbessert zudem die Entfeuchtung der Luft und reduziert damit den Innenbeschlag auf den Fahrzeugscheiben.

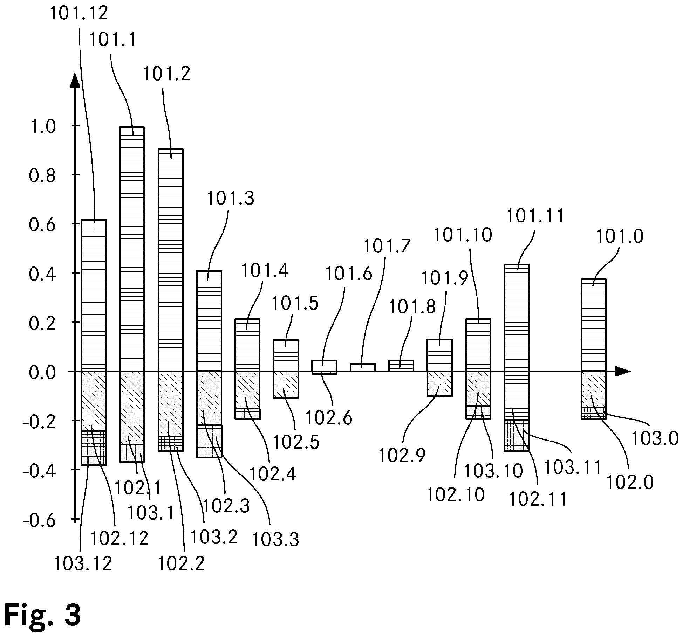

Die Figur 3 ist eine Darstellung der Energieersparnis im Jahresverlauf. Sie basiert auf einer Simulation und zeigt auf, wie stark sich die benötigte Heizenergie durch den Einsatz der Klimageräte als Wärmepumpe und die Infrarot-Heizung reduzieren lässt. Die Werte beziehen sich auf die klimatischen Bedingungen im Schweizer Mittelland.

Die auf der vertikalen Achse dargestellten Energiewerte sind in kWh/km pro Fahrzeug angegeben. Auf der horizontalen Achse sind oberhalb der Nulllinie der Heizenergieverbrauch 101.1...12 für die Monate Januar-Dezember sowie der Durchschnittswert 101.0 für das gesamte Jahr angegeben. Die Darstellung beginnt dabei mit dem Monat Dezember, damit die Wintermonate Dezember-Februar nebeneinander dargestellt sind.

Unterhalb der Nulllinie sind die Ersparnisse 102. 1... 12, 102.0 aufgrund der Infrarot-Heizung und die Ersparnisse 103.1...12, 103.0 aufgrund der Nutzung des Klimageräts als Wärmepumpe angegeben.

Wie sich aus der Figur 3 ergibt, beträgt die Ersparnis über das ganze Jahr gesehen ziemlich genau 50%, wobei auf den Einsatz der Infrarot-Heizung ca. 37%, auf die Nutzung der Klimageräte als Wärmepumpe ca. 13% entfallen.

Die Erfindung ist nicht auf das dargestellte Ausführungsbeispiel beschränkt. So lassen sich erfindungsgemäss auch Dachklimageräte ohne Wärmepumpenfunktion einsetzen. Spezifische Dimensionen und Kenndaten der eingesetzten Komponenten können zudem anders gewählt werden, insbesondere in Abhängigkeit der Ausdehnung des zu klimatisierenden Fahrgastraums und der erwarteten klimatischen Bedingungen.

Zusammenfassend ist festzustellen, dass die Erfindung eine Anlage zum Klimatisieren eines Fahrgastraumes eines Passagierbusses schafft, welche auch bei tieferen Aussentemperaturen wirtschaftlich funktioniert.

## Patentansprüche

1. Anlage zum Klimatisieren eines Fahrgastraumes (5) eines Passagierbusses (1), umfassend:
a) mindestens ein Dachklimagerät (20, 40) zum Erzeugen von wahlweise erhitzter oder abgekühlter Luft zur Klimatisierung des Fahrgastraums (5);
b) ein Heizgerät (80) zum Erwärmen eines Wärmeträgers;
wobei
c) das mindestens eine Dachklimagerät (20, 40) einen Wärmetauscher als Heizelement für das Erzeugen der erhitzten Luft aufweist;
**dadurch gekennzeichnet, dass**
d) die Anlage eine Infrarot-Heizanlage (60) für den Fahrgastraum (5) umfasst; und
e) das Heizgerät (80) mit dem Wärmetauscher des mindestens einen Dachklimageräts (20, 40) derart verbunden ist, dass im Heizgerät (80) erwärmter Wärmeträger dem Wärmetauscher zuführbar ist, wobei ein zusätzlicher Kreislauf für den vom Heizgerät (80) erwärmten Wärmeträger Heizrohre aufweist, die im Wärmetauscher parallel zu Rohren verlaufen, welche ein vom Dachklimagerät (20, 40) temperiertes Fluid führen und der Wärmetauscher des mindestens einen Dachklimageräts (20, 40) mit einem Gebläse (46) ausgerüstet ist, mittels welchem sich Luft ansaugen, durch Aluminium-Lamellen des Wärmetauschers leiten und in einen Fahrgastraum (5) abgeben lassen, wobei die Heizrohre für den vom Heizgerät (80) erwärmten Wärmeträger ebenfalls durch diese Aluminium-Lamellen geführt sind.

2. Anlage nach Anspruch 1, **dadurch gekennzeichnet, dass** als Wärmeträger Wasser eingesetzt wird, dass es sich beim Heizgerät (80) um ein Gerät zum Erhitzen von Wasser handelt und dass der Wärmetauscher ein Wasser-Luft-Wärmetauscher ist.

3. Anlage nach Anspruch 1 oder 2, **dadurch gekennzeichnet, dass** das mindestens eine Dachklimagerät (20, 40) als Wärmepumpe betreibbar ist.

4. Anlage nach einem der Ansprüche 1 bis 3, umfassend eine Steuerung zum Steuern des mindestens einen Dachklimageräts (20, 40), der Infrarot-Heizanlage (60) und des Heizgeräts (80), wobei die Steuerung mindestens in einen ersten Betriebsmodus versetzbar ist, in welchem das mindestens eine Dachklimagerät (20, 40) erhitzte Luft zur Klimatisierung des Fahrgastraums (5) erzeugt und die Infrarot-Heizanlage (60) ausgeschaltet ist und in einen zweiten Betriebsmodus, in welchem das mindestens eine Dachklimagerät (20, 40) erhitzte Luft zur Klimatisierung des Fahrgastraums (5) erzeugt und die Infrarot-Heizanlage (60) eingeschaltet ist.

5. Anlage nach Anspruch 4, **dadurch gekennzeichnet, dass** der erste Betriebsmodus oder der zweite Betriebsmodus in Abhängigkeit einer Aussentemperatur und einer Energieverfügbarkeit aktiviert werden.

6. Anlage nach einem der Ansprüche 1 bis 5, **gekennzeichnet durch** eine Frontbox (90) zum Klimatisieren eines Fahrerabteils (4) und zum Befreien einer Frontscheibe von Beschlag.

7. Anlage nach Anspruch 6, **dadurch gekennzeichnet, dass** das Heizgerät (80) zum Beheizen des Fahrerabteils mit der Frontbox (90) verbunden ist.

8. Anlage nach einem der Ansprüche 1 bis 7, **gekennzeichnet durch** einen Kühlkreislauf für auf dem Dach des Passagierbusses angeordnete Fahrbatterien (7), wobei der Kühlkreislauf mit mindestens einem der Dachklimageräte verbunden ist.

9. Anlage nach einem der Ansprüche 1 bis 8, **dadurch gekennzeichnet, dass** eine gesamte benötigte Heizleistung zum Beheizen des Fahrgastraumes durch das mindestens eine Dachklimagerät (20, 40), das Heizgerät (80) und die Infrarot-Heizanlage (60) bereitgestellt wird.

10. Passagierbus (1) mit einer Anlage zum Klimatisieren eines Fahrgastraumes (5) nach einem der Ansprüche 1 bis 9.

## Claims

1. Installation for air-conditioning a passenger compartment (5) of a passenger bus (1), comprising:
a) at least one roof air-conditioning unit (20, 40) for producing selectively heated or cooled air for air-conditioning the passenger compartment (5) ;
b) a heating unit (80) for heating a heat carrier;
wherein
c) the at least one roof air-conditioning unit (20, 40) has a heat exchanger as a heating element for the production of the heated air;
**characterized in that**
d) the installation comprises an infrared heating installation (60) for the passenger compartment (5) ;
and
e) the heating unit (80) is connected to the heat exchanger of the at least one roof air-conditioning unit (20, 40) such that heat carrier heated in the heating unit (80) is able to be fed to the heat exchanger, wherein an additional circuit for the heat carrier heated by the heating unit (80) has heating tubes which run in the heat exchanger parallel to tubes which pass a fluid temperature-controlled by the roof air-conditioning unit (20, 40), and the heat exchanger of the at least one roof air-conditioning unit (20, 40) is equipped with a fan (46) by means of which air can be sucked in, conducted through aluminium lamellae of the heat exchanger and discharged into a passenger compartment (5), wherein the heating tubes for the heat carrier heated by the heating unit (80) are likewise led through said aluminium lamellae.

2. Installation according to Claim 1, **characterized in that** water is used as heat carrier, **in that** the heating unit (80) is a unit for heating water, and **in that** the heat exchanger is a water/air heat exchanger.

3. Installation according to Claim 1 or 2, **characterized in that** the at least one roof air-conditioning unit (20, 40) is able to be operated as a heat pump.

4. Installation according to one of Claims 1 to 3, comprising a controller for control of the at least one roof air-conditioning unit (20, 40), of the infrared heating installation (60) and of the heating unit (80), wherein the controller is able to be put at least into a first operating mode, in which the at least one roof air-conditioning unit (20, 40) produces heated air for air-conditioning the passenger compartment (5) and the infrared heating installation (60) is off, and into a second operating mode, in which the at least one roof air-conditioning unit (20, 40) produces heated air for air-conditioning the passenger compartment (5) and the infrared heating installation (60) is on.

5. Installation according to Claim 4, **characterized in that** the first operating mode or the second operating mode is activated in a manner dependent on an outside temperature and an availability of energy.

6. Installation according to one of Claims 1 to 5, **characterized by** a front box (90) for air-conditioning a driver's compartment (4) and for demisting a front window.

7. Installation according to Claim 6, **characterized in that** the heating unit (80), for heating the driver's compartment, is connected to the front box (90).

8. Installation according to one of Claims 1 to 7, **characterized by** a cooling circuit for traction batteries (7) arranged on the roof of the passenger bus, wherein the cooling circuit is connected to at least one of the roof air-conditioning units.

9. Installation according to one of Claims 1 to 8, **characterized in that** a total required heating power for heating the passenger compartment is provided by the at least one roof air-conditioning unit (20, 40), the heating unit (80) and the infrared heating installation (60).

10. Passenger bus (1) having an installation for air-conditioning a passenger compartment (5) according to one of Claims 1 to 9.

## Revendications

1. Installation destinée à climatiser un habitacle (5) d'un bus de passagers (1), comprenant :
a) au moins un climatiseur de toit (20, 40) pour générer sélectivement de l'air chauffé ou de l'air rafraîchi pour la climatisation de l'habitacle (5) ;
b) un dispositif de chauffage (80) pour chauffer un agent caloporteur ;
c) l'au moins un climatiseur de toit (20, 40) comportant un échangeur thermique en tant qu'élément chauffant pour la génération de l'air chauffé ;
**caractérisée en ce que**
d) l'installation comprend une installation de chauffage aux infrarouges (60) pour l'habitacle (5) ;
et
e) le dispositif de chauffage (80) est relié avec l'échangeur thermique de l'au moins un climatiseur de toit (20, 40), de telle sorte que de l'agent caloporteur chauffé dans le dispositif de chauffage (80) puisse être alimenté vers l'échangeur thermique, un circuit supplémentaire pour l'agent caloporteur chauffé par le dispositif de chauffage (80) comportant des tubes chauffants qui dans l'échangeur thermique s'étendent en parallèle de tubes, lesquels conduisent un fluide tempéré par le climatiseur de toit (20, 40) et l'échangeur thermique de l'au moins un climatiseur de toit (20, 40) étant équipé d'un ventilateur (46) au moyen duquel de l'air se laisse aspirer, guider à travers des lamelles en aluminium de l'échangeur thermique et restituer dans un habitacle (5), les tubes chauffants pour l'agent caloporteur chauffé par le dispositif de chauffage (80) étant également guidés à travers lesdites lamelles en aluminium.

2. Installation selon la revendication 1, **caractérisée en ce qu'**en tant qu'agent caloporteur est utilisée de l'eau, **en ce que** le dispositif de chauffage (80) est un dispositif destiné à chauffer de l'eau et **en ce que** l'échangeur thermique est un échangeur thermique eau-air.

3. Installation selon la revendication 1 ou 2, **caractérisée en ce que** l'au moins un climatiseur de toit (20, 40) est exploitable comme une pompe à chaleur.

4. Installation selon l'une quelconque des revendications 1 à 3, comprenant un système de commande destiné à commander l'au moins un climatiseur de toit (20, 40), l'installation de chauffage aux infrarouges (60) et le dispositif de chauffage (80), le système de commande étant susceptible d'être amené au moins dans un premier mode de fonctionnement, dans lequel l'au moins un climatiseur de toit (20, 40) génère de l'air chauffé pour la climatisation de l'habitacle (5) et l'installation de chauffage aux infrarouges (60) est à l'arrêt, et dans un deuxième mode de fonctionnement dans lequel l'au moins un climatiseur de toit (20, 40) génère de l'air chauffé pour la climatisation de l'habitacle (5) et l'installation de chauffage aux infrarouges (60) est en marche.

5. Installation selon la revendication 4, **caractérisée en ce que** le premier mode de fonctionnement ou le deuxième mode de fonctionnement sont activés en fonction d'une température extérieure et d'une disponibilité d'énergie.

6. Installation selon l'une quelconque des revendications 1 à 5, **caractérisée par** un caisson frontal (90) destiné à climatiser une cabine du conducteur (4) et à désembuer un pare-brise.

7. Installation selon la revendication 6, **caractérisée en ce que** pour chauffer la cabine du conducteur, le dispositif de chauffage (80) est relié avec le caisson frontal (90).

8. Installation selon l'une quelconque des revendications 1 à 7, **caractérisée par** un circuit de refroidissement pour des accumulateurs de traction (7) placés sur le toit du bus de passagers, le circuit de refroidissement étant relié avec au moins l'un des climatiseurs de toit.

9. Installation selon l'une quelconque des revendications 1 à 8, **caractérisée en ce qu'**une puissance de chauffage totale requise pour chauffer l'habitacle est mise à disposition par l'au moins un climatiseur de toit (20, 40), le dispositif de chauffage (80) et l'installation de chauffage aux infrarouges (60).

10. Bus de passagers (1) pourvu d'une installation destinée à climatiser un habitacle (5) selon l'une quelconque des revendications 1 à 9.
